# EUROPÄISCHE PATENTSCHRIFT

(11) **EP 0 437 684 B1**
(45) Veröffentlichungstag und Bekanntmachung des Hinweises auf die Patenterteilung: **13.04.1994**
(21) Anmeldenummer: 90120160.8
(22) Anmeldetag: 20.10.1990
(51) Int. Cl.: B01D 17/032, B01D 21/02, E03F 5/16

(54) **Stärkeabscheider**
Starch separator
Séparateur d'amidon

(30) Priorität: 15.12.1989 DE 8914762 U
(43) Veröffentlichungstag der Anmeldung: 24.07.1991
(73) Patentinhaber: PASSAVANT-WERKE AG, 65322 Aarbergen 7 (DE)
(72) Erfinder: Diefenbach, Günter, W-6255 Dornburg 1 (DE); Helffenstein, Kurt, W-6252 Diez (DE); Schäfer, Friedrich, W-6251 Cramberg (DE); Zimmermann, Bernd, W-6251 Netzbach (DE)

(56) Entgegenhaltungen:
- DE-A- 2 706 557
- DE-A- 3 842 860
- DE-U- 8 704 146

## Beschreibung

Die Erfindung bezieht sich auf einen Stärkeabscheider üblicher Bauart, d.h. mit einem im wesentlichen horizontal beruhigt durchströmten Abscheidebecken, in dem die Stärke zu Boden sinken kann. Stärkeabscheider besitzen durchweg eine Sprühvorrichtung im Einlaufbereich, mit der der sich beim Einlaufen bildende Schaum zerschlagen wird.

Es war üblich, diese Sprühvorrichtung mit Trinkwasser zu beschicken. Trinkwasseranschlüsse sind aber nach der neuen DIN 1988 auch mit sog. Rohrtrennern nicht mehr zulässig. Es wurde daher bereits vor einiger Zeit vorgeschlagen (DE-A-27 06 557), das Sprühwasser dem Abscheidebecken selber zu entnehmen, und zwar einem im wesentlichen feststofffreien Bereich etwa in mittlerer Beckenhöhe mittels einer dort angeordneten Pumpe, die druckseitig mit der Sprühvorrichtung in Verbindung steht. Diese Entnahme des Sprühwassers stört aber den Abscheidevorgang durch Geschwindigkeitserhöhung und Turbulenz. Die Aufgabe, die mit der Erfindung gelöst werden soll, bestand daher darin, diese ungünstige Beeinflussung des Abscheidevorgangs zu vermeiden. Diese Aufgabe wird nunmehr dadurch gelöst, daß die Saugseite der Pumpe der Sprühvorrichtung zur Vermeidung von Störungen des Abscheidevorgangs durch Geschwindigkeitserhöhung und Turbulenzen außerhalb des vom Abwasser horizontal durchströmten, abscheidewirksamen Beckenquerschnitts liegt. Für die Anordnung der Pumpe bzw. der Saugseite der Pumpe gibt es mehrere Möglichkeiten. Entweder legt man die Saugseite der Pumpe in den durch eine Tauchwand abgeteilten Auslaufschacht, oder es wird seitlich an das Becken ein besonderes Abteil angesetzt, das durch ein Sieb vom Becken getrennt ist. Die dritte Möglichkeit besteht darin, die Pumpe in einem dem Abscheidebecken nachgeschalteten Probenahme- oder Revisionsschacht unterzubringen. Die Pumpe ist dann über eine separate Leitung mit dem Auslaufschacht des Abscheidebeckens verbunden. Sofern die Pumpe im Auslaufschacht selber angeordnet ist, ist sie vorzugsweise von einem Saugkorb umgeben, der mit Füßen von oben in den Auslaufschacht gestellt ist.

Weitere Ausgestaltungsgedanken der Erfindung ergeben sich aus den Unteransprüchen und der nachfolgenden Beschreibung von in den Zeichnungen dargestellten Ausführungsbeispielen. Es zeigen im einzelnen:
- Fig. 1: einen vertikalen Längsschnitt durch eine erste Ausführungsform mit vollständig innerhalb des Auslaufschachts angeordneter Pumpe,
- Fig. 2: eine zweite Ausführungsform, bei der die Pumpe an der auslaufseitigen Tauchwand aufgehängt ist,
- Fig. 3: eine weitere Variante, bei der die Pumpe unmittelbar unter dem Auslaufschacht steht.
- Fig. 4: eine vierte Bauart, die ein seitlich angesetztes Abteil für die Pumpe aufweist, und
- Fig. 5: eine letzte Bauform, bei der die Pumpe in dem Revisionsschacht untergebracht ist.

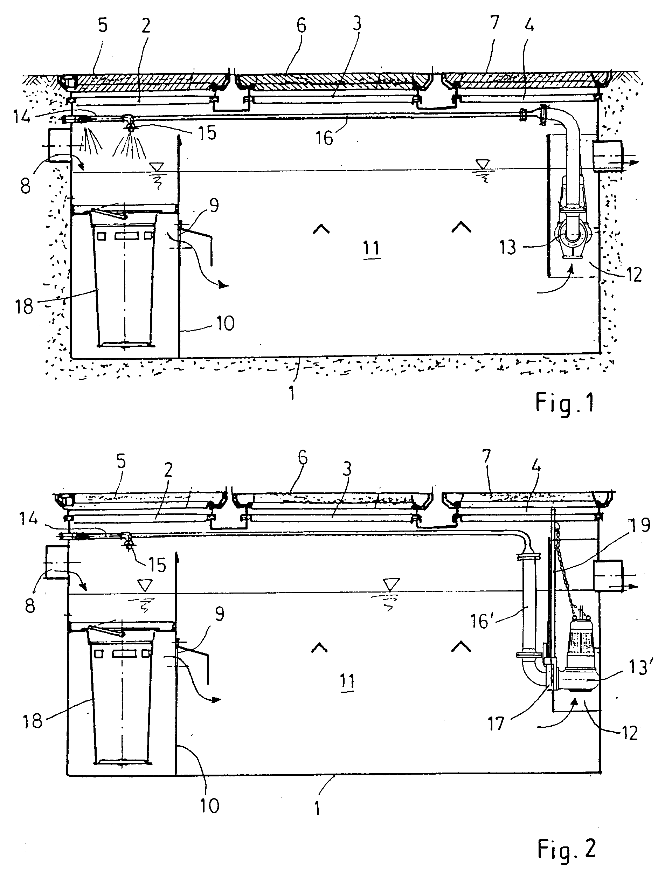

Bei dem Abscheidebecken 1 nach Fig. 1 handelt es sich um eine Bauart, die unterirdisch eingebaut werden kann. Die Revisionsöffnungen 2, 3, 4 sind dafür durch entsprechende, mit einem besonderen Belag füllbare Deckel 5, 6, 7 abgedeckt. Unter dem Zulauf 8 steht ein Schmutzfangeimer 18, aus dem das Abwasser seitlich ausläuft und durch die Öffnung 9 in der Trennwand 10 in die Absetzkammer 11 gelangt. Das gereinigte Abwasser verlaßt die Kammer aufsteigend durch einen Auslaufschacht 12. In diesem Schacht ist die Beschickungspumpe 13 für die Spüleinrichtung 14 untergebracht, die über dem Schmutzfangeimer 18 installiert ist und mehrere Sprühdüsen 15 in ringförmiger Anordnung aufweist. Die Druckwasserleitung 16 verläuft an der Beckenwand.

Bei der Ausführungsform nach Fig. 2, die mit der nach Fig. 1 in allen gleich bezifferten Teilen übereinstimmt, liegt nur die Pumpe 13' im Auslaufschacht 12. Die Druckleitung 16' ist durch die Tauchwand des Auslaufschachts starr verlegt. Der Flanschanschluß 17 ist lose ausgebildet, so daß die Pumpe zu Inspektionen an einer Führungsstange 19 oder doppelseitigen Flachführungen hochgezogen werden kann.

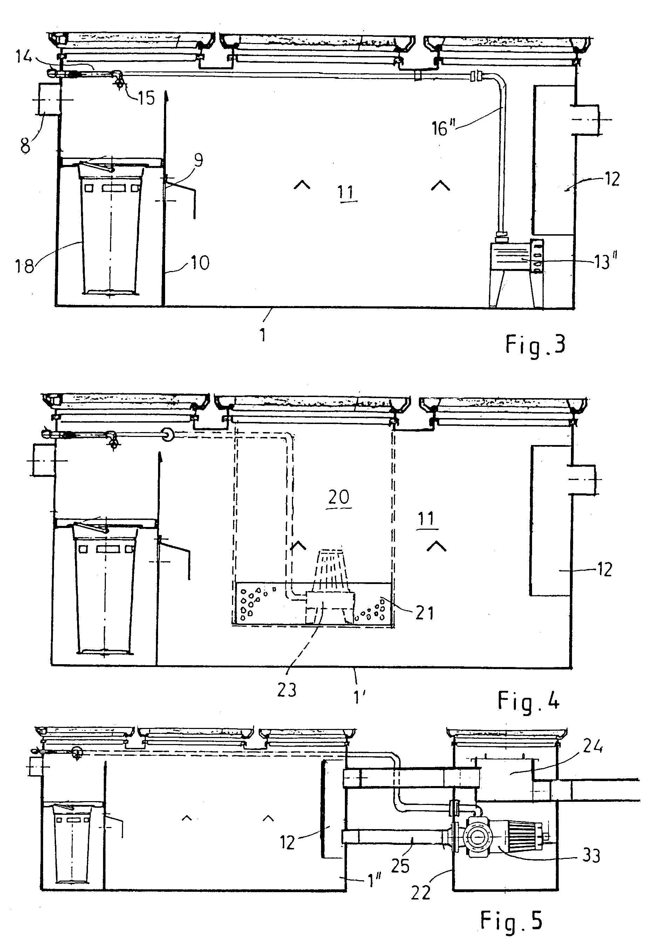

Bei der Bauart nach Fig. 3 steht die Pumpe 13'' mitsamt ihrem Saugkorb auf Füßen unmittelbar unter dem Auslaufschacht 12 und kann zur Inspektion an dem nach oben geführten Druckleitungsstück 16'' nach oben gehoben werden.

Bei der Bauart nach Fig. 4 wird eine andere Technik der Sprühwasserentnahme angewendet. An die Längsseite des Abscheidebeckens 1' ist ein weiteres Abteil 20 angesetzt, das oben durch eine entsprechende Abdeckung verschlossen ist und unten die Pumpe 23 aufnimmt. Die Verbindung zur Absetzkammer 11 wird von einem Sieb 21 gebildet, das für Sinkstoffe undurchlässig, aber für Sprühwasser durchlässig ist.

Bei der Bauart nach Fig. 5 liegt die Pumpe 33 ganz außerhalb des Abscheidebeckens 1'', und zwar in einem nachgeschaltetem Revisionsschacht 22, der auch eine Probenahmeeinrichtung 24 enthält. Die Saugseite der Pumpe 33 ist über eine separate Leitung 25 mit dem unteren Abschnitt des Auslaufschachtes 12 verbunden.

In allen gezeigten Fällen liegt die Ansaugstelle der Sprühwasserpumpe außerhalb des vom Abwasser durchströmten Querschnitts und behindert damit in keiner Phase die Abscheidung der Sinkstoffe.

## Patentansprüche

1. Stärkeabscheider mit einem im wesentlichen horizontal durchströmten Abscheidebecken (1; 1'; 1''), das eine von einer saugseitig mit dem Abscheider in Verbindung stehenden Pumpe (13; 13'; 13''; 23; 33) bedufschlagte Sprühvorrichtung (15) zum Zerschlagen des Schaums im Einlaufbereich aufweist, **dadurch gekennzeichnet**, daß die Saugseite der Pumpe (13; 13'; 13''; 23; ; 33) zur Vermeidung von Störungen des Abscheidevorgangs durch Geschwindigkeitserhöhung und Tubulenzen außerhalb des vom Abwasser horizontal durchströmten, abscheidewirksamen Beckenquerschnitts liegt.

2. Stärkeabscheider nach Anspruch 1, **dadurch gekennzeichnet**, daß die Saugseite im durch eine Tauchwand abgetrennten Auslaufschacht (12) liegt.

3. Stärkeabscheider nach Anspruch 2, **dadurch gekennzeichnet**, daß die Pumpe (13; 13') komplett im Auslaufschacht (12) liegt.

4. Stärkeabscheider nach Anspruch 1, **dadurch gekennzeichnet**, daß die Pumpe (23) in einem seitlich an das Becken (1') angesetzten Abteil (20) liegt, das vom Becken durch ein Sieb (21) getrennt ist.

5. Stärkabscheider nach Anspruch 1, **dadurch gekennzeichnet**, daß die Pumpe (33) in einem dem Abscheider becken (1'') nachgeschalteten Probenahmeschacht (22) liegt.

6. Stärkeabscheider nach Anspruch 5, **dadurch gekennzeichnet**, daß die Saugseite der Pumpe (33) mit dem Auslaufschacht (12) des Abscheiderbeckens (1'') durch eine separate Leitung (25) verbunden ist.

7. Stärkeabscheider nach Anspruch 3, **dadurch gekennzeichnet**, daß die Pumpe (13'') von einem Saugkorb umgeben ist, der auf Füßen unter dem Auslaufschacht (12) gestellt ist.

8. Stärkeabscheider nach Anspruch 2, **dadurch gekennzeichnet**, daß die Pumpe (13') durch eine Öffnung in der Tauchwand gesteckt ist.

9. Stärkeabscheider nach Anspruch 8, **dadurch gekennzeichnet**, daß die Pumpe (13') an der Tauchwand lösbar befestigt ist.

10. Stärkeabscheider nach Anspruch 9, **dadurch gekennzeichnet**, daß die Pumpe (13') an einer senkrechten Führungsstange (19) oder doppelseitigen Flachführung gehalten ist.

## Claims

1. A starch separator having a separating basin (1, 1') passed essentially horizontally, which includes a spray device (15) to decompose the foam in the inflow range which is pressurized by a pump (13; 13'; 13''; 23; 33) communicating on its suction side with the separator, characterized in that the suction side of the pump (13; 13'; 13''; 23; 33) is located outside the basin cross-section that is passed by the sewage flow in a horizontal direction and effective in separation so as to avoid interference with the separating process due to an increase in velocity and turbulences.

2. A starch separator as claimed in claim 1, characterized in that the suction side is located in the outflow channel (12) separated by a downflow baffle.

3. A starch separator as claimed in claim 2, characterized in that the pump (13; 13') is located entirely in the outflow channel (12).

4. A starch separator as claimed in claim 1, characterized in that the pump (23) is located in a compartment (20) attached on the side of the basin (1'), which compartment is separated from the basin by a screen (21).

5. A starch separator as claimed in claim 1, characterized in that the pump (33) is located in a sampling chamber (22) connected after the separator basin (1'').

6. A starch separator as claimed in claim 5, characterized in that the suction side of the pump (33) is connected with the outflow channel (12) of the separator basin (1'') through a separate conduit (25).

7. A starch separator as claimed in claim 3, characterized in that the pump (13'') is surrounded by a suction basket placed on legs underneath the outflow channel.

8. A starch separator as claimed in claim 2, characterized in that the pump (13') is inserted through an opening in the downflow baffle.

9. A starch separator as claimed in claim 8, characterized in that the pump (13') is detachably attached to the downflow baffle.

10. A starch separator as claimed in claim 9, characterized in that the pump (13') is held on a vertical guide rod (19) or a double-sided flat guide.

## Revendications

1. Séparateur d'amidon avec un bassin de séparation essentiellement traversé horizontalement (1 ; 1') présentant un dispositif d'arrosage (15) alimenté par une pompe reliée avec le séparateur côté aspiration (13 ; 13' ; 13 '' ; 23 ; 33) pour fracasser la mousse dans la zone d'entrée,
**caractérisé par le fait**
que le côté aspiration de la pompe (13 ; 13' ; 13 '' ; 23 ; 33) est situé en dehors de la section du bassin traversée horizontalement responsable de la séparation, afin d'éviter des perturbations de l'opération de séparation du fait d'une augmentation de la vitesse et de turbulences.

2. Séparateur d'amidon selon revendication 1,
**caractérisé par le fait**
que le côté aspiration est situé dans un puits d'évacuation (12) séparé par une paroi plongeuse.

3. Séparateur d'amidon selon revendication 2,
**caractérisé par le fait**
que la pompe (13 ; 13') est entièrement située dans le puits d'évacuation (12).

4. Séparateur d'amidon selon revendication 1,
**caractérisé par le fait**
que la pompe (23) est située dans un compartiment (20) agencé latéralement contre le bassin (1') et séparé du bassin par un tamis (21).

5. Séparateur d'amidon selon revendication 1,
**caractérisé par le fait**
que la pompe (33) est située dans un puits de prélèvement (22) agencé à la suite du bassin de séparation (1'').

6. Séparateur d'amidon selon revendication 5,
**caractérisé par le fait**
que le côté aspiration de la pompe (33) est relié au puits d'évacuation (12) du bassin de séparation (1'') par une conduite séparée (25).

7. Séparateur d'amidon selon revendication 3,
**caractérisé par le fait**
que la pompe (13'') est entourée d'une corbeille d'aspiration posée sur des pieds sous le puits d'évacuation (12).

8. Séparateur d'amidon selon revendication 2,
**caractérisé par le fait**
que la pompe (13') est enfichée dans la paroi plongeuse par un orifice.

9. Séparateur d'amidon selon revendication 8,
**caractérisé par le fait**
que la pompe (13') est fixée de façon amovible dans la paroi plongeuse.

10. Séparateur d'amidon selon revendication 9,
**caractérisé par le fait**
que la pompe (13') est fixée sur une barre de guidage (19) verticale ou sur un guidage plat à double face.
